# EUROPÄISCHE PATENTANMELDUNG

(11) **EP 0 740 956 A2**
(43) Veröffentlichungstag der Anmeldung: **06.11.1996**
(21) Anmeldenummer: 96107025.7
(22) Anmeldetag: 03.05.1996
(51) Int. Cl.: B01J 20/34, B01D 53/26

(54) **Verfahren und Vorrichtung zum Aufbereiten eines ein Mittel, insbesondere Feuchte, enthaltenden Adsorptionsmittels**

(30) Priorität: 04.05.1995 DE 19516311
(71) Anmelder: Gräff, Roderich Wilhelm, Dr.-Ing., D-64291 Darmstadt-Arheilgen (DE)
(72) Erfinder: Gräff, Roderich Wilhelm, Dr.-Ing., D-64291 Darmstadt-Arheilgen (DE)
(74) Vertreter: Zinngrebe, Horst, Dr.rer.nat.

(57) **Zusammenfassung**

Beschrieben wird ein Verfahren und eine Vorrichtung zum Aufbereiten eines ein Mittel, insbesondere Feuchte enthaltenden Adsorptionsmittels, bei dem das Adsorptionsmittel durch heißes Regenerationsgas von dem Mittel befreit und anschließend gekühlt wird. Zur Verbesserung der Energiebilanz beim Trocknen feuchten Gases, insbesondere Luft, ist vorgesehen, daß das Adsorptionsmittel unmittelbar vor seiner Regeneration von Regenerationsabgas durchströmt wird, welches eine niedrigere Temperatur hat als das heiße Regenerationsgas.

## Beschreibung

Die Erfindung betrifft ein Verfahren zum Aufbereiten eines ein Mittel, insbesondere Feuchte enthaltenden Adsorptionsmittels, bei dem das Adsorptionsmittel durch heißes Regenerationsgas von dem Mittel befreit und anschließend gekühlt wird, sowie eine Vorrichtung zur Durchführung des Verfahrens.

In der US-Patentschrift 4,509,272 wird ein Verfahren zum Trocknen von Kunststoffgranulat beschrieben, bei dem warme, das Granulat durchströmende Trockenluft die Feuchte aus dem Granulat entzieht. Die feuchte Abluft aus der Granulattrocknung wird anschließend durch ein Adsorptionsmittel, üblicherweise Molekularsieb oder eine Mischung aus diesem mit Silikagel, geleitet, welches der feuchten Abluft die aus dem Granulat mitgeführte Feuchte durch Adsorption entzieht. Wenn sich das Adsorptionsmittel mit Feuchtigkeit gesättigt hat, wird es der Regeneration unterworfen, bei der heißes Regenerationsgas durch das Adsorptionsmittel geleitet wird. Das heiße Regenerationsgas bringt das im Adsorptionsmittel enthaltene Wasser zum Verdampfen, und das Regenerationsabgas nimmt den Wasserdampf nach außen mit. Nach abgeschlossener Regeneration, wenn also das Adsorptionsmittel wieder trocken ist, wird wieder feuchte Luft, nämlich die Abluft aus dem Granulattrichter, durch das Adsorptionsmittel geleitet.

Diese Trocknung der feuchten Abluft arbeitet sehr wirkungsvoll, erfodert jedoch einen relativ hohen Energieeinsatz. Energieverluste treten unter anderem dadurch auf, daß das vor allem am Ende eines Regenerationszyklus sehr heiße Regenerationsabgas ins Freie entlassen wird. Man hat zwar versucht, das das Adsorptionsmittel verlassende Regenerationsabgas durch einen Wärmetauscher zu führen, in welchem das von außen angesaugte, kalte Regenerationsgas vor seiner Einleitung in das Adsorptionsmittel aufgewärmt wird. Hierbei ist nachteilig, daß das heiße Regenerationsabgas aus dem Adsorptionsmittel vor allem zu Beginn des Regenerationszyklus eine Wasserfracht mitführt, die sich im Wärmetauscher niederschlägt und zu dessen vorzeitiger Korrosion beiträgt. Außerdem verteuert der Wärmetauscher die Installation und Wartung der Anlage.

Der Erfindung liegt daher die Aufgabe zugrunde, die Energiebilanz beim Trocknen feuchten Gases, insbesondere Luft zu verbessern.

Bei dem eingangs genannten Verfahren ist dazu erfindungsgemäß vorgesehen, daß das Adsorptionsmittel unmittelbar vor seiner Regeneration von Regenerationsabgas durchströmt wird, welches eine niedrigere Temperatur hat als das heiße Regenerationsgas. Damit wird der Wärmeinhalt des das Adsorptionsmittel verlassenden Regenerationsabgases zur Aufheizung des Adsorptionsmittels unmittelbar vor seinem Eintritt in die Regeneration benutzt. Damit geht der Wärmeinhalt des Regenerationsabgases für die Energiebilanz des Verfahrens nicht verloren und es wird außerdem ein Wärmetauscher zum Aufwärmen des kalten Regenerationsgases eingespart. Zwar führt das das Adsorptionsmittel verlassende Regenerationsabgas eine aus dem Regenerationsprozeß stammende Wasserlast mit, die wegen der Sättigung des Adsorptionsmittels an Feuchte unmittelbar vor seinem Eintritt in die Regeneration jedoch nur zu einem geringen Teil, wenn überhaupt, in dem Adsorptionsmittel abgeladen wird. Am Ende der Regeneration des Adsorptionsmittels ist das sehr heiße, das Adsorptionsmittel verlassende Regenerationsabgas praktisch nicht mehr wasserbelastet, so daß die gesamte Wärmeenergie des das Adsorptionsmittel verlassenden Regenerationsabgases zum Vorheizen und Vor-Regenerieren des Adsorptionsmittels unmittelbar vor dessen Eintritt in die Regeneration ausgenutzt werden kann. Das Adsorptionsmittel wird also einer Zone der Vorregeneration und einer nachgeschalteten Zone der Vollregeneration unterworfen. Das in die Zone der Vorregeneration eingeleitete Regenerationsgas hat stets eine niedrigere Temperatur als das in die Vollregenerationszone eingeführte Regenerationsgas.

Die Erfindung läßt sich besonders günstig an einem Adsorptionsmittel realisieren, das insbesondere zyklisch durch eine Adsorptionsphase, in welcher das Adsorptionsmittel dem Gas die Feuchte entzieht, durch eine Vorregenerationsphase, in welcher das Adsorptionsmittel von dem Regenerationsabgas in Richtung Regenerationstemperatur aufgewärmt und vorregeneriert wird und durch eine Vollregenerationsphase, in welcher das feuchtegesättigte Adsorptionsmittel vollständig regeneriert wird, bewegt wird.

Bevorzugte Ausgestaltung des erfindungsgemäßen Verfahrens sind im übrigen in den Ansprüchen 1 bis 11 angegeben.

Zur Durchführung des erfindungsgemäßen Verfahrens eignet sich besonders eine Vorrichtung zum Trocknen eines feuchten Gases, insbesondere Luft, mit einem Gebläse, welches das feuchte Gas einem ein Adsorptionsmittel enthaltenden Behälter zuführt, wobei an den Behälter eine Regenerationsabgasleitung zur Zufuhr heißen Regenerationsgases zum Adsorptionsmittel und eine Regenerationsabgasleitung angeschlossen sind, und wobei erfindungsgemäß die Regenerationsabgasleitung einem Abschnitt des Behälters zugeführt ist, der unmittelbar vor der Regeneration befindliches Adsorptionsmittel enthält. In bevorzugter Ausgestaltung der erfindungsgemäßen Vorrichtung ist der Behälter ein das Adsorptionsmittel enthaltender drehangetriebener Rotor. Zweckmäßig ist der Behälter oder Rotor in drei Abschnitte oder Waben unterteilt, von denen ein erster Abschnitt Adsorptionsmittel zum Entzug der Feuchte aus dem Gas, der zweite Abschnitt in der Vorregeneration stehendes Adsorptionsmittel und der dritte Abschnitt in der Vollregeneration befindliches Adsorptionsmittel enthält. Alternativ weist der Behälter mehrere auf einem Karussel befestigte Töpfe auf, wobei in jedem Topf Adsorptionsmittel enthalten ist und die einzelnen Töpfe die genannten aufeinander folgenden Abschnitte schrittweise durchlaufen.

Im Sinne weiterer Energieeinsparungen empfiehlt es sich, die Erfindung weiter in der Weise auszugestalten, daß die im heißen, vollregenerierten Adsorptionsmittel enthaltene Wärmeenergie in einen Wärmespeicher übergeführt wird, aus welchem sie nachfolgend zum Aufheizen des kalten Rgenerationsgases wieder abgezogen werden kann. Dies ermöglicht erfindungsgemäß eine höhere Aufheizung der Regenerationsluft als es bisher möglich war, da sowohl die im Rotor am Ende des Regenerationstaktes wie auch die im Regenerationsabgas befindliche Wärmemengen zurückgewonnen werden. Darüberhinaus wird hierdurch eine Kühlung des Adsorptionsmittels statt - wie bisher - mit feuchter Raumluft hier mit trockener Luft erreicht.

Weitere bevorzugte Ausgestaltungen der Erfindung sind in den Unteransprüchen angegeben.

Die Erfindung wird nachstehend anhand der in der beigefügten Zeichnung dargestellten Ausführungsbeispiele im einzelnen beschrieben.

Es zeigen:
- Fig. 1: eine Vorrichtung zum Trocknen von feuchter Abluft aus einem Trocknungsprozeß für Kunststoffgranulat;
- Fig. 2: eine schematische Darstellung der Erfindung nach Figur 1 zur Verwendung in einem raumlufttechnischem Gerät;
- Fig. 3: eine schematische Darstellung einer anderen Ausführungsform der Erfindung; und
- Fig. 4: eine schematische Darstellung einer weiteren Ausführungsform der Erfindung.

Ein in einen Trocknungstrichter 1 eingefülltes, nicht dargestelltes Kunststoffgranulat aus beispielsweise PTFE (Polytetrafluorethylen) wird in der Weise von in ihm enthaltener Feuchtigkeit befreit, daß längs einer Luftleitung 10 herangeführte trockene Luft nach Aufheizen in einem Heizer 2 in den Trichter 1 eingeleitet wird, dort das Kunststoffgranulat nach oben durchstreicht und den Trichter 1 über eine Abluftleitung 12 verläßt. Am unteren Ausgabestutzen 3 des Trichters 1 wird getrocknetes Kunststoffgranulat mittels Luft durch die Leitung 14 einem Einfülltrichter 4 zugeführt, der auf der Beschickungsöffnung einer im Ganzen mit 5 bezeichneten Extrudermaschine sitzt. Der Einfülltrichter 4 enthält einen nicht dargestellten Luftabscheider, so daß aus diesem die Förderluft längs der Leitung 16 abgezogen und einem Ventil 6 zugeführt werden kann.

Wie nachstehend im einzelnen noch zu beschreiben sein wird, wird die mit Feuchtigkeit beladene Abluft über die Abluftleitung 12 durch ein in einem Trockner 8 enthaltenes Adsorptionsmittel geführt, welches aus der Abluft die Feuchtigkeit adsorbiert, die dann als Trokkenluft über Leitung 10 zur Fortsetzung des Granulattrocknungsprozesses verwendet werden kann. Wenn das Adsorptionsmittel mit Feuchtigkeit gesättigt ist, wird es einer Regeneration unterworfen, bei der heiße Regenerationsluft durch das Adsorptionsmittel geleitet wird und diesem die Feuchte entzieht. Das getrocknete Adsorptionsmittel kann dann wieder die Abluft trocknen.

Der Trockner 8 weist im wesentlichen einen von einem Elektromotor 9 über ein Reibrad oder Ritzel 31 an seiner Peripherie angetriebenen Rotor 32 auf, der gemäß Pfeil 33 bei Draufsicht in Uhrzeigerrichtung dreht und dazu entsprechend in nicht dargestellten Lagern um seine Achse drehbar gelagert ist. Der Rotor 32 ist mit einem Adsorptionsmittel beispielsweise Molekularsieb gefüllt. Das Adsorptionsmittel im Rotor 32 durchläuft während der Drehung des Rotors 32 in Umfangsrichtung vier in Drehrichtung hintereinander liegende Abschnitte 34, 35, 36 und 38. Das Adsorptionsmittel, das sich während der Drehung des Rotors 32 gerade im Abschnitt 34 befindet, wird dazu benutzt, die Abluft aus der Leitung 12 zu trocknen; das gerade den Abschnitt 35 durchlaufende Adsorptionsmittel wird durch heiße Regenerationsabluft von der Adsorptionstemperatur (etwa 60°-80°C) auf die Regenerationstemperatur (180°C) erwärmt; im Abschnitt 36 wird das Adsorptionsmittel durch heiße Regenerationsluft regeneriert und das den Abschnitt 38 durchlaufende Adsorptionsmittel wird von der Regenerationstemperatur des vorhergehenden Abschnittes 36 auf eine Temperatur herunter gekühlt, in der das Adsorptionsmittel bei Eintritt in den Abschnitt 34 Feuchtigkeit aus der Abluft adsorbieren kann, also beispielsweise auf etwa 60°C bei Verwendung von Molekularsieb als Adsorptionsmittel.

Dazu mündet die Abluftleitung 12 in eine Feuchtluftleitung 18, die in das Ventil 6 führt. Die Auslaßleitung 20 aus dem Ventil 6 führt die feuchte Abluft in ein Zirkulationsfilter 11, dessen Ausgangsluftleitung 22 über einen Kühler 37 und eine Luftleitung 21 in die Ansaugöffnung eines Gebläses 39 führt. Der aus der Druckseite des Gebläses 39 ausströmende Feuchtluftstrom wird geteilt, und zwar ein erster Feuchtluftstrom wird über eine erste Feuchtluftleitung 24 dem Abschnitt 34 des Rotors 32 von unten zugeführt. Eine zweite Feuchtluftleitung 26 leitet Feuchtluft in den Abschnitt 38 des Rotors 32. Das Verhältnis der beiden Luftströme ist so gewählt, daß der zweite, durch die Leitung 26 streichende Feuchtluftstrom einen geringeren zeitlichen Durchsatz hat als der durch die Leitung 24 herangeführte Feuchtlufthauptstrom.

Wie aus Vorstehendem ersichtlich, wird der aus Leitung 24 in den Abschnitt 34 des Adsorptionsmittels eingeleitete Feuchtlufthauptstrom dort von seiner Feuchtigkeit befreit und verläßt den Abschnitt 34 auf der gegenüberliegenden Seite des Rotors 32 über die Trockenluftleitung 10. Der mengenmäßig kleinere Feuchtluftstrom aus Leitung 26 dient zum Kühlen des sich im Abschnitt 38 befindenden Adsorptionsmittels, verliert in diesem seine Feuchtigkeit kaum (weil das Adsorptionsmittel bei den in Abschnitt 38 vorherrschenden höheren Temperaturen keine Feuchtigkeit adsorbieren kann) und verläßt den Abschnitt 38 auf der gegenüberliegenden Seite des Rotors 32 durch Leitung 28 als weiterer Feuchtluftstrom, der in die Feuchtluftleitung 18 mündet.

Zur Regeneration des im Abschnitt 36 sich während der Drehung des Rotors 32 befindenden Adsorptionsmittels saugt ein weiteres Gebläse 49 Außenluft gemäß Pfeil 44 an und drückt sie über Außenluftleitung 42 in einen Regenerationsheizer 45, der die ankommende Luft auf eine Temperatur von beispielsweise 250°C bei Verwendung von Molekularsieb bringt. Die den Regenerationsheizer 45 verlassende Regenerationsluft gelangt über Regenerationsleitung 46 in den Abschnitt 36 des Rotors 32. Die Auslaßleitung 48 für die den Abschnitt 36 verlassende, mit Feuchtigkeit beladene Regenerationsabluft, die jetzt eine niedrigere Teperatur als die in den Abschnitt 36 eingeleitete Regenerationsluft hat, wird von unten in den Abschnitt 35 eingeleitet, der sich in Rotordrehrichtung vor dem Abschnitt 36 und hinter dem Abschnitt 34 befindet und mit Feuchte gesättigtes, zur Regeneration anstehendes Adsorptionsmittel enthält. Aus dem Abschnitt 35 führt eine Leitung 47 die kühle Regenerationsluft ins Freie.

Ein Optimum der Energieersparnis wird erreicht, wenn durch Abstimmung von Regenerationsluftmenge, Größe der Regenerationssektoren 35, 36 und der Regenerationslufttemperatur zueinander die Austrittstemperatur der Regenerationsluft aus der Leitung 47 so niedrig liegt, daß die relative Feuchte dieser Luft fast 100% erreicht.

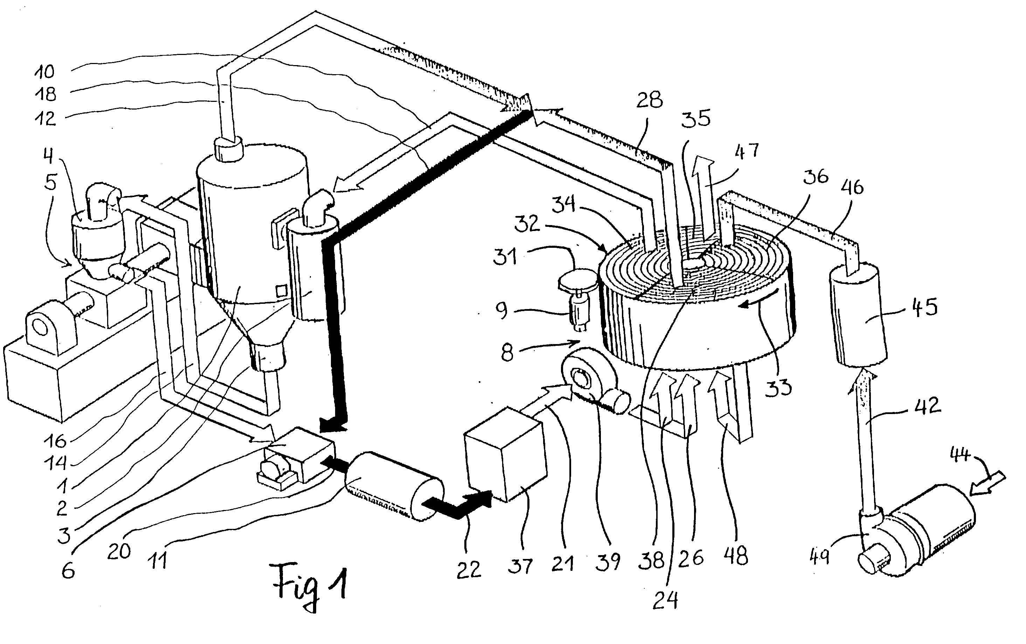

Im übrigen liegt es im Rahmen der Erfindung, die Luftleitungen 48 und 47 so anzuordnen, daß die Regenerationsluft den Abschnitt 35 nicht, wie in Figur 1 dargestellt, in gleicher Richtung wie die Strömungsrichtung der zu trocknenden Abluft im Abschnitt 34, sondern entgegengesetzt dazu durchströmt.

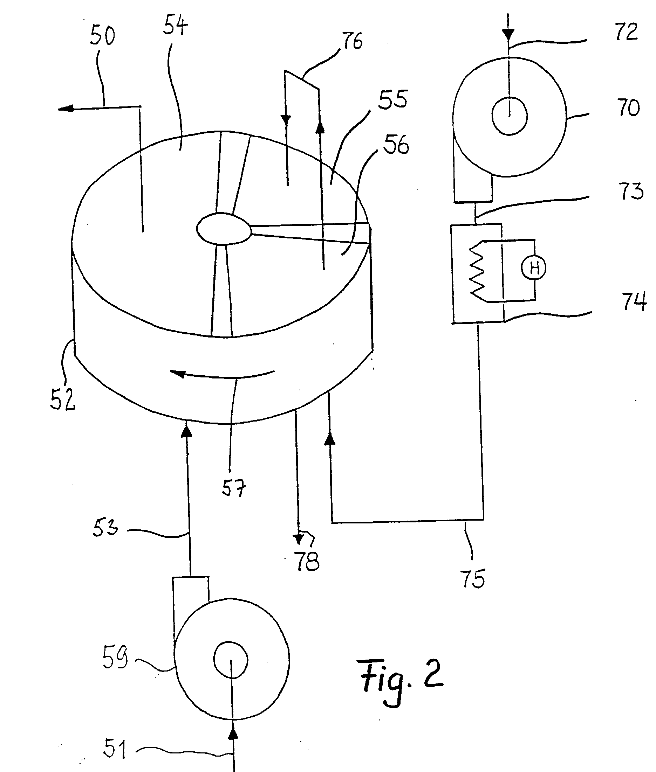

Das weitere Ausführungsbeispiel der Erfindung gemäß Figur 2 ist nicht nur zum Trocknen von Abluft aus Granulattrocknern, sondern auch dazu geeignet, in einem raumlufttechnischen Gerät eine mit Feuchtigkeit belastete Raumluft zu entfeuchten.

Ein Gebläse 59 saugt über eine Luftleitung 51 die zu trocknende Raumluft an und führt sie über eine Raumluftleitung 53 durch einen Abschnitt 54 eines Rotors 52. In dem Rotor 52 befindet sich Adsorptionsmittel, beispielsweise Molekularsieb oder Silikagel, welches der den Abschnitt 54 durchströmenden Raumluft deren Feuchte entzieht, so daß die trockene Raumluft den Abschnitt 54 über Zuluftleitung 50 verläßt und in den nicht dargestellten Raum geblasen wird.

Ein weiteres Gebläse 70 saugt über Luftleitung 72 Außenluft an und führt sie über Leitung 73 einer Heizeinrichtung 74 zu. Die die Heizung 74 verlassende Regenerationsluft gelangt über Leitung 75 in einen Abschnitt 56 des Rotors 52, in welchem die über Leitung 75 herangeführte heiße Regenerationsluft das im Abschnitt 56 enthaltene Adsorptionsmittel von seinem Wassergehalt befreit. Die den Abschnitt 56 verlassende Regenerationsabluft gelangt über Leitung 76 in einen Abschnitt 55 des Rotors 52, welcher in Drehrichtung des Rotors gemäß Pfeil 57 dem Abschnitt 56 vorgelagert und dem Abschnitt 54 nachgeordnet ist. Im Abschnitt 55 wird das mit Feuchtigkeit gesättigte Adsorptionsmittel von dem über Leitung 76 geführten heißen Regenerationsabgas in Richtung auf die Regenerationstemperatur vorgewärmt. Das abgekühlte Regenerationsgas verläßt den Abschnitt 55 über Leitung 78, besitzt eine relative Feuchte nahe 100% und wird ins Freie entlassen.

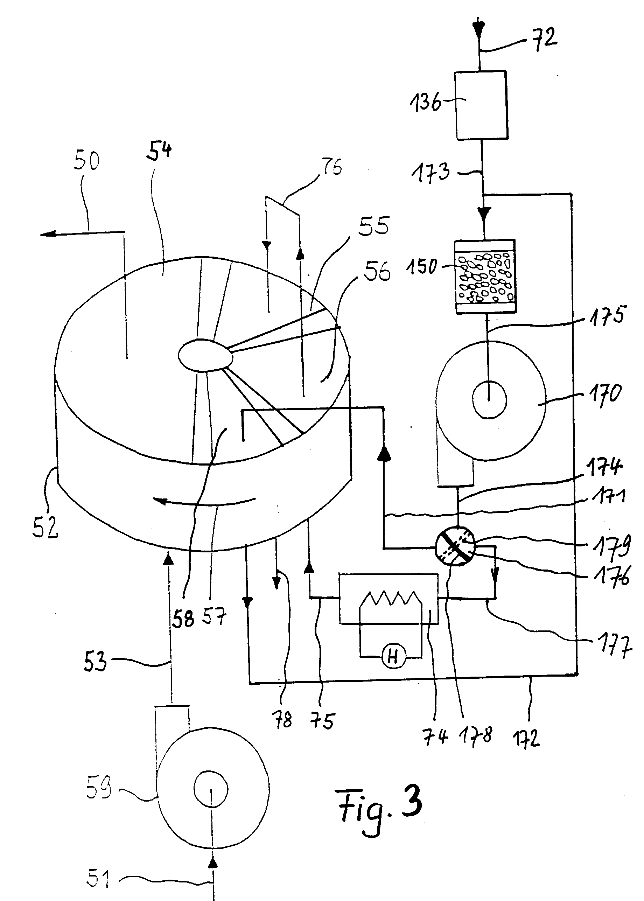

Bei dem Ausführungsbeispiel der erfindungsgemäßen Fig. 3 sind diejenigen Vorrichtungsteile, die mit denen aus Fig. 2 identisch sind, mit gleichen Bezugszeichen bezeichnet. Der Unterschied zur Ausführungsform gemäß Fig. 2 besteht in wesentlichen darin, daß in dem Rotor 52 eine Kühlzone 58 vorgesehen ist, die in Drehrichtung 57 des Rotors 52 der Haupt-Regeneration 156 nachgeschaltet und dem Abschnitt 54 vorgelagert ist. Zur Regeneration des Adsorptionsmittels im Rotor 52 saugt ein Gebläse 170 Außenluft über eine Luftleitung 72 an, die durch ein Luftfilter 136 geführt wird, durch eine das Luftfilter 136 mit einem Rekuperator 150 verbindenden Luftleitung 173 strömt, den Rekuperator 150 durchströmt und über eine Luftleitung 175 in den axialen Einlaß des Gebläses 170 gelangt. Der Rekuperator ist, wie in der Offenlegungsschrift DE-A-43 17 768 beschrieben, ein mit kleinen Steinen oder Metallkugeln gefüllter Behälter. Die Druckseite des Gebläses 170 ist über eine Luftleitung 174 mit einem Wechselventil 176 verbunden, dessen Schaltstellungen mit 178 (ausgezogen dargestellt) und 179 (gestrichelt dargestellt) bezeichnet sind. Von einem Auslaß des Umschaltventil 176 führt eine Kühlluftleitung 171 in den Kühlabschnitt 58 des Rotors 52. Eine Abluftleitung 172 verbindet den Auslaß aus dem Kühlabschnitt 58 mit der Luftleitung 173. Ein zweiter Ausgang des Schaltventils 176 ist über eine Luftleitung 177 mit dem Eingang einer Regenerationsgasheizung 74 verbunden, deren Ausgangsleitung 75 in den Hauptregenerationsabschnitt 56 des Rotors führt.

Während des Regenerationszyklus für das im Rotor 52 enthaltene Adsorptionsmittel befindet sich das Schaltventil 176 in der Schaltstellung 178. Dadurch saugt das Gebläse 170 Außenluft aus Leitung 72 über den Filter 136 und den Rekuperator 150 an, kühlt diesen auf die Temperatur der Außenluft, also z.B. 20°C, ab und drückt sie durch die Heizeinrichtung 74 in den Hauptregenerationsabschnitt 56 des Rotors 52. Die von der Heizung 74 auf etwa 250°C aufgeheizte und über Leitung 75 in den Hauptregenerationsabschnitt 56 eintretende Regenerationsluft regeneriert das sich im Abschnitt 56 befindliche Adsorptionsmittel, indem es ihm Feuchte entzieht. Die aus dem Hauptregenerationsabschnitt 56 austretende Regenerationsluft wird über Leitung 76 dem Vor-Regenerationsabschnitt 55 des Rotors zugeführt und verläßt den Rotor 52 über den Kamin 78, die von der Regenerationsluft mitgeführte Feuchte wird über den Kamin 78 abgeblasen. Nähert sich die Temperatur der Regenerationsluft, die in Drehrichtung 57 des Rotors am Ende des Bereichs 56 austritt, um fortgeleitet zu werden, in der Leitung 76 derjenigen Temperatur, mit der die heiße Regenerationsluf die Heizung 74 verläßt, ist aus dem Adorsptionsmittel die Feuchte ausgetrieben, so daß in die Kühlphase übergangen wird. Dazu wird das Schaltventil für eine kurze Zeit in den Schaltzustand 179 umgeschaltet, wodurch eine Kreislaufströmung entsteht. Das Gebläse 170 drückt Luft durch den Kühlabschnitt 58, kühlt diesen und wärmt sich selber entsprechend auf. Diese nunmehr heiße Luft strömt über Leitung 172 in die Leitung 173 und wird vom Gebläse 170 durch den Rekuperator 150 gesaugt, wo sie den Rekuperator aufheizt und selber auf die Temperatur des Rekuperators abgekühlt wird, also auf die Temperatur der Außenluft. Hiermit lädt sie ihre mitgeführte erhebliche Wärme in dem Rekuperator 150 ab. Die jetzt kalte Kühlluft gelangt aus dem Umschaltventil 176 über Leitung 171 in den Kühlabschnitt 58 des Rotors 52 und kühlt dort das Adsorptionsmittel. Relativ heiße Kühl-Abluft verläßt den Kühlabschnitt über Luftleitung 172, die in die Leitzung 173 mündet und die mitgeführte Wärme erneut in dem Rekuperator speichert.

Die Kühlluft wird solange in dem Kühlkreislauf durch den Kühlabschnitt 58 geschaltet, bis die hinteren Schichten des Rekuperators beginnen sich zu erwärmen, so daß auch die Temperatur der aus dem Rekuperator austretenden Luft anzusteigen beginnt. Dann wird durch Umschalten des Ventils 176 in die Regenerationsphase eingetreten, in der wegen des heißen, den Rekuperator 150 verlassenden Regenerationsgases die Heizung 74 erst sehr viel später als bisher eingeschaltet werden muß. Da das Aufheizen des zu regenerierenden Adsorptionsmittels im Abschnitt 56 und die damit verknüpfte Verdampfung der adsorbierten Feuchtigkeit aus dem Adsorptionsmittel länger dauert als die Kühlung des Adsorptionsmittels im Kühlabschnitt 58, ist die Summe der Abschnitte 55 und 56 in Winkelgraden gemessen größer als der Kühlabschnitt 58 in Winkelgraden. Alternativ kann die Beaufschlagung der Abschnitte 55, 56 des Rotors 52 länger dauern als die Beaufschlagung der Kühlzone 58 mit Kühlluft. Typisch ist ein Verhältnis von etwa 2:1.

Mit dieser Ausführungsform der Erfindung wird der Vorteil erreicht, daß Schwankungen des Taupunktes in der die Luftleitung 50 verlassenden Trockenluft praktisch vollständig vermieden werden, weil die Drehung des Rotors 52 zur Regeneration und zur Kühlung des Adsorptionsmittels praktisch nicht mehr angehalten werden muß. Denn mit jedem Anhalten und erneuten Weiterdrehen des Rotors 52 schwankt der genannte Taupunkt.

Im einzelnen kann man die Verhältnisse so wählen, daß beispielsweise jeweils im Rhythmus 2 Minuten regeneriert und 1 Minute gekühlt wird. Sind diese Zeiten aber festgelegt, dann kann man anhand der bekannten Regenerationsluftmenge die Größe des Rekuperators so festlegen, daß diese innerhalb der 2 Minuten Regenerationszeit praktisch voll auf Raumtemeratur abgekühlt wird. Bei dieser Festlegung ist dann sichergestellt, daß in der dan folgenden kürzeren Kühlphase, bei der der Rekuperator 150 aufgeheizt wird, dieser sich nur auf der Eingangseite derselben aufheizt, so daß das vom Gebläse 170 aus dem Rekuperator 150 angesaute Gas auch am Ende der Kühlphase noch eine Temperatur hat, die praktisch der Raumtemeratur entspricht. Nach dem Umschalten der Kühlphase auf die Heizphase wird die im Rekuperator gespeicherte Wärmemenge zur Vorwärmung für den Regenerationsakt benutzt.

Vorteilhaft ist weiter, daß nur ein Wechselventil, nämlich das Ventil 176 benötigt wird, um die Kühlung statt mit feuchter Außenluft mit trockener Umluft durchzuführen.

Weiter kann dann, wenn die Regerationsphase und die Kühlphase zeitlich sehr kurz gehalten werden, der Rekuperator 150 baulich sehr klein sein und sogar völlig entfallen. Dann wirkt die Masse des Gebläses als Rekuperator, wobei das Gebläse dann zweckmäßig ein Seitenkanalgebläse ist, bei dem eine große Metallmasse mit der zu kühlenden Luft in Berührung kommt. Wegen der hohen Luftgeschwindigkeit im Gebläse stellen sich hohe Übertragungswerte ein, die eine gute Kühlung des zu kühlenden Gases sicherstellen. Der Wegfall eines mit Kugeln gefüllten Rekuperators 150 ist immer dann möglich, wenn die aus dem Adsorptionsmittel austretende und abzuführende Wärmemenge klein ist im Verhältnis zu der Wärmeaufnahmekapazität des Gebläses.

Grundsätzlich können alle Gebläse oder Kompressoren als Rekuperatoren eingesetzt werden, wie sie üblicherweise in Adsorptionsvorrichtungen, insbesonder Trocknern verwenden werden, sofern sie die auftretenden Tmperaturen aushalten. Je nach Adsorptionsmittel liegen diese am Ende der Regeneration bei etwan 80° bis 240°C. Somit sind bevorzugt Gebläse und Kompressoren aus Metall geeignet. Je höher ihre Wärmekapazität ist in Relation zu der geförderten Luftmenge, umso stärker ist ihre rekuperative Wirkung. Infrage kommen sowohl Radial- wie Axialgebläse, insbesondere Seitenkanalgebläse und axial oder zentrifugal arbeitende Kompressoren.

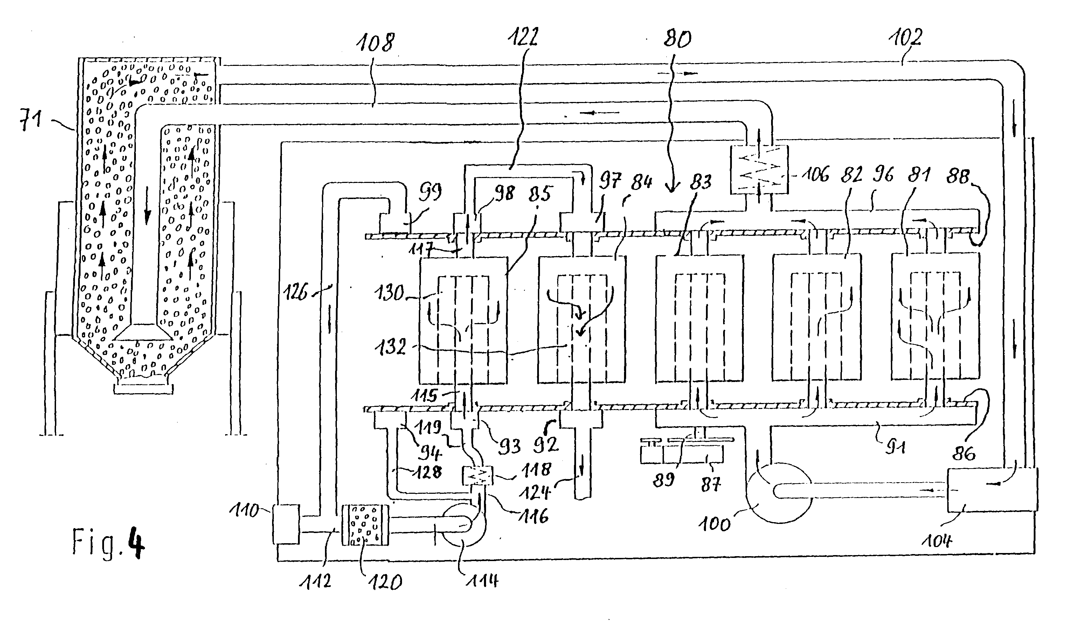

Gemäß Fig. 4 ist ein Trocknungstrichter 71 mit einem im Ganzen mit 80 bezeichneten Trockner von der Karussel-Bauart gekoppelt, die grundsätzlich aus der US-Patentschrift 3,757,491 bekannt ist. Auf den Inhalt dieser Schrift wird daher Bezug genommen, soweit dies für das Verständnis der Erfindung erforderlich ist. Danach enthält das Karussel im vorliegenden Beispiel fünf Trockentöpfe 81, 82, 83, 84, 85, die zusammen mit einer unteren Ventilscheibe 86 und einer oberen Ventilscheibe 88 mit einer von einem Motor 87 angetriebenen Welle 89 drehbar in gegenüberliegenden Öffnungen der Ventilscheiben 86 und 88 gehalten sind. Der unteren Ventilscheibe 86 sind vier untere stationäre Ventilkammern 91, 92, 93, 94 zugeordnet, während die obere Ventilscheibe 88 mit vier stationären oberen Ventilkammern 96, 97, 98, 99 zusammenwirkt. Die fünf Trockentöpfe 81,...,85 sind auf einer zur Welle 89 konzentrischen Kreisbahn angeordnet und die acht Ventilkammern 91,..., 94, 96,..., 99 sind längs konzentrischen Kreisbogen ausgebildet. Ein Gebläse 100 saugt aus der vom Trocknungstrichter 71 herangeführten Abluftleitung 102 über einen Filter 104 die mit Feuchte beladene Abluft an und läßt sie über die untere Ventilkammer 91 durch die mit den ersten drei Trockentöpfen 81, 82, 83 korrespondierenden Öffnungen gemäß den in Fig. 3 eingezeichneten Pfeilen in die Trockentöpfe 81, 82, 83 gelangen, welche das Adsorptionsmittel enthalten und sich demzufolge in der Adsorptionsphase befinden. Durch das in den genannten Trockentöpfen enthaltene Adsorptionsmittel wird der feuchten Abluft die Feuchte entzogen, so daß Trockenluft die Trockentöpfen 81, 82, 83 durch die mit der oberen Ventilkammer 96 korrespondierenden Öffnungen gemäß den eingezeichneten Pfeilen verläßt, durch eine Heizeinrichtung 106 auf die erforderliche Temperatur gebracht und über eine Trockenluftleitung 108 wieder dem Trocknungstrichter 71 zugeführt wird.

Der fünfte Trockentopf 85 befindet sich in der Regenerationsphase, während der aus einem Ansaugfilter 110 über eine Leitung 112 und einen Wärmespeicher 120 von einem weiteren Gebläse 114 Außenluft angesaugt und über einen Kanal 116 und eine Heizeinrichtung 118 sowie einen anschließenden Rohrstutzen 119 der Ventilkammer 93 zugeführt wird. Aus der Ventilkammer 93 gelangt die heiße Regenerationsluft durch eine Öffnung gemäß eingetragenem Pfeil in das Innere des Trockentopfes 85 und durchströmt das mit Feuchtigkeit gesättigte Adsorptionsmittel 130. Die das Adsorptionsmittel 130 durchströmende heiße Regenerationsluft nimmt aus diesem die Feuchte mit und verläßt den Trockentopf 85 über einen Rohrstutzen 117, von welchem sie über die Ventilkammer 98 und ein an diese angeschlossenes U-förmiges Rohrstück 122 in die Ventilkammer 97 gelangt, welche in Drehrichtung des Karussels vor der Ventilkammer 98 angeordnet ist. Aus der Ventilkammer 97 wird das Regenerationsabgas durch den Trockentopf 84 und das in ihm enthaltene mit Feuchte gesättigte Adsorptionsmittel 132 gedrückt, deren Temperatur diejenige aus der Adsorptionsphase besitzt und somit wesentlich kühler als das Adsorptionsmittel 130 ist. Infolgedessen heizt das heiße Regenerationsabgas aus der Ventilkammer 97 das Adsorptionsmittel 132 auf und verläßt dieses sowie den Trockentopf 84 über Ventilkammer 92 und einen Ausblasstutzen 124. Das Adsorptionsmittel 132 befindet sich damit in einer Vorregenerationsphase, während der es allmählich auf die Regenerationstemperatur aufgeheizt und von dem während der Regenerationsphase zunehmend trockner werdenden Regenerationsabgas vorregeneriert wird.

Selbstverständlich kann das Rohrstück 122 auch so gelegt werden, daß es die Ventilkammer 98 mit der Ventilkammer 92 verbindet, wobei dann an die Ventilkammer 97 ein das kühle Regenerationsabgas ins Freie entlassender Schornstein angeschlossen ist. Bei dieser Ausführungsform durchströmt das Regenerationsabgas das Adsorptionsmittel 132 in der gleichen Richtung wie die Abluft das in den Trockentöpfen 81, 82, 83 enthaltene Adsorptionsmittel und wie das Regenerationsgas das Adsorptionsmittel 130 durchströmt. Dies bringt den Vorteil, daß die im Adsorptionsmittel 132 enthaltene Feuchte in diesem nach oben und damit in die gleiche Richtung getrieben wird wie die im Adsorptionsmittel 130 enthaltene Feuchte.

Während der an der Regenerationsphase anschließenden Kühlphase wird das Karussel mit den zugehörigen Trockentöpfen und Ventilscheiben 86, 88 um die Achse 89 weitergedreht, so daß der Rohrstutzen 117 unter der Ventilkammer 99 und der Einlaßrohrstutzen 115 für den Trockentopf 85 über der Ventilkammer 94 steht. Die Ventilkammer 99 ist über ein Verbindungsrohrstück 126 mit dem Rohrstück 112 verbunden. Da die in die Ventilkammer 99 führende Öffnung in der Ventilplatte 88 von der Öffnung in derselben, die in die Ventilkammer 98 führt, einen kleineren Abstand hat, als der Abstand der in die Ventilkammern 98 und 97 führenden Öffnungen, zweckmäßig nur die Hälfte dieses Abstandes beträgt und da die gleichen Abstandsverhältnisse auch für die in die Ventilkammern 94, 93 und 92 führenden Öffnungen in der unteren Ventilplatte 86 besteht, wird bei Weiterdrehen des Karussels um beispielsweise die Hälfte des genannten Abstands keiner der Trockentöpfe 83, 84 mit einer Ventilkammer verbunden sein, so daß diese kurzzeitig von Regenerationsluft oder Regenerationsabluft nicht durchströmt werden.

Dafür drückt das Gebläse 114 kühle, angesaugte Außenluft über ein vom Rohrstück 116 abzweigendes Rohrstück 128 über die Ventilkammer 94 in den Trockentopf 85 und führt dessen Abluft über Ventilkammern 99 und Rohrstück 126 durch den Wärmespeicher 120 zur Ansaugseite des Gebläses 114 zurück. Auf diese Weise kann der im heißen und bereits voll regenerierten Adsorptionsmittel enthaltene Wärmeinhalt soweit in den Wärmespeicher 120 übertragen werden, daß das auf diese Weise durch trockene Luft gekühlte Adsorptionsmittel sich schließlich auf Adsorptionstemperatur befindet.

Wenn das Adsorptionsmittel danach hinreichend kühl geworden ist, wird der Trockentopf 85 durch entsprechendes Drehen des Karussels wieder in die Adsorptionsphase überführt. Gleichzeitig rückt der Trockentopf 84 in die vor der Regenerationsphase ein, in dem die ihm zugeordneten Öffnungen in der oberen Ventilplatte 88 und der unteren Ventilplatte 86 jetzt mit den Ventilkammern 98 bzw. 93 kommunizieren. Dagegen sind die Ventilkammern 94 und 99 durch die Ventilplatten 88 und 86 verschlossen. Infolgedessen saugt das Gebläse 114 kühle Außenluft über den Filter 110 an, die im Wärmespeicher 120 aufgeheizt werden, so daß die Heizung 118 die angesaugte Regenerationsluft nur noch auf die letzten erforderlichen Wärmegrade für die Regenerationstemperatur aufheizen muß. Erst nach Erschöpfen des Wärmespeichers 120 ist die volle Heizleistung der Heizung 118 für das Regenerationsgas erforderlich.

## Patentansprüche

1. Verfahren zum Aufbereiten eines ein Mittel, insbesondere Feuchte, enthaltenden Adsorptionsmittels (130, 132), bei dem das Adsorptionsmittel durch heißes Regenerationsgas von dem Mittel befreit und anschließend gekühlt wird, dadurch gekennzeichnet, daß das Adsorptionsmittel unmittelbar vor seiner Regeneration von Regenerationsabgas durchströmt wird, welches eine niedrigere Temeratur hat als das heiße Regenerationsgas.

2. Verfahren nach Anspruch 1, dadurch gekennzeichnet, daß ein mit Feuchte beladenes Abgas durch ein Feuchte-Adsorptionsmittel geleitet und das mit Feuchte beladene Adsorptionsmittel von heißem Regenerationsabgas zur Vorregenerierung und anschließend von heißem Regenerationsgas durchströmt wird.

3. Verfahren nach Anspruch 1 oder 2, dadurch gekennzeichnet, daß das Adsorptionsmittel durch eine Adsorptionsphase, in welcher das Adsorptionsmittel dem Gas die Feuchte entzieht, durch eine Vorregenerationsphase, in welcher das Adsorptionsmittel von dem Regenerationsabgas in Richtung auf die Regenerationstemperatur aufgewärmt und vorregeneriert wird, sowie durch eine Regenerationsphase bewegt wird, in welcher das mit Feuchte beladene Adsorptionsmittel von heißem Regenerationsgas regeneriert wird.

4. Verfahren nach Anspruch 3, dadurch gekennzeichnet, daß das Adsorptionsmittel durch die Phasen kontinuierlich oder schrittweise bewegt wird.

5. Verfahren nach einem der vorstehenden Ansprüche, dadurch gekennzeichnet, daß Adsorptionsmittel nach der Regeneration gekühlt wird, wobei die in dem Adsorptionsmittel enthaltene Wärme von einem Kühlgas in einen Wärmespeicher (150) überführt wird und zum Vorheizen des Regenerationsgases verwendet wird.

6. Verfahren nach Anspruch 5, dadurch gekennzeichnet, daß als Wärmespeicher die Masse eines Gebläses (170) benutzt wird.

7. Verfahren nach einem der vorstehenden Ansprüche dadurch gekennzeichnet, daß der Wärmeinhalt des Adsorptionsmittels nach seiner Regeneration in einen Wärmespeicher (120) transportiert wird.

8. Verfahren nach Anspruch 7, dadurch gekennzeichnet, daß die im Wärmespeicher gespeicherte Wärme zum Aufheizen des Regenerationsgases benutzt wird.

9. Verfahren nach einem der vorstehenden Ansprüche, dadurch gekennzeichnet, daß als Adsorptionsmittel Molekularsieb oder Silikagel eingesetzt werden.

10. Verfahren nach einem der vorstehenden Ansprüche, dadurch gekennzeichnet, daß die Regenerationsgasmenge, die Regenerationsgastemperatur sowie die Vorregenerationsphase und die Regenerationsphase so aufeinander abgestimmt werden, daß das die Vorregenerationsphase verlassende kühle Regenerationsabgas eine relative Feuchte von nahe 100 % besitzt.

11. Verfahren nach einem der Ansprüche 1 bis 10, dadurch gekennzeichnet, daß ein kontinuierlich drehender Rotor (52) vier Bereiche (54, 55, 56, 58) aufweist, wobei in einem ersten Bereich das Adsorptionsmittel Feuchte aus einem durch es hindurchgeleitetenden Gas aufnimmt, in einem zweiten und dritten Bereich eine Regeneration des Adsorptionsmittels und im vierten Bereich eine Kühlung des Adsorptionsmittels erfolgt, und zwar seitlich abwechselnd von Regeneration in den zweiten und dritten Bereichen und von Kühlen im vierten Bereich (58) durch einen Rekuperator (150) im Kreislauf.

12. Vorrichtung zur Durchführung des Verfahrens nach einem der vorstehenden Ansprüche mit einem Gebläse (39, 59), welches das das Mittel enthaltende Gas einem ein Adsorptionsmittel enthaltenden Behälter (32, 52; 81,..., 85) zuführt, wobei an dem Behälter eine Regenerationsleitung (46, 75, 116, 119) zur Zufuhr heißen Regenerationsgases zum Adsorptionsmittel (130) und eine Regenerationsabgasleitung (48, 76, 124) angeschlossen sind, dadurch gekennzeichnet, daß die Regenerationsabgasleitung direkt einem Abschnitt des Behälters zugeführt ist, der unmittelbar vor der Regeneration befindliches Adsorptionsmittel enthält.

13. Vorrichtung nach Anspruch 12, dadurch gekennzeichnet, daß der Behälter ein das Adsorptionsmittel enthaltender drehangetriebener Rotor (32, 52) ist.

14. Vorrichtung nach Anspruch 12 oder 13, dadurch gekennzeichnet, daß der Behälter in drei Abschnitte unterteilt ist, von denen ein erster Abschnitt (34, 54) Adsorptionsmittel zum Entzug des Mittels aus dem Gas, der zweite Abschnitt (35, 55) kurz vor der Regeneration stehendes Adsorptionsmittel und der dritte Abschnitt (36, 56) in der Regeneration befindliches Adsorptionsmittel enthält.

15. Vorrichtung nach Anspruch 14, dadurch gekennzeichnet, daß das Adsorptionsmittel in einem vierten Abschnitt in der Weise gekühlt wird, daß sein Wärmeinhalt in einen Wärmespeicher (120) übertragen wird.

16. Vorrichtung nach einem der Ansprüche 12 bis 15, dadurch gekennzeichnet, daß der Behälter mehrere auf einem Karussel befestigte Töpfe (81, 82, 83, 84, 85) aufweist, wobei in jedem Topf Adsorptionsmittel enthalten ist und die einzelnen Töpfe nacheinander die genannten Abschnitte durchlaufen.

17. Vorrichtung nach einem der Ansprüche 12 bis 16, dadurch gekennzeichnet, daß das Regenerationsabgas in der gleichen Richtung durch das Adsorptionsmittel (132) geführt wird, wie das heiße Regenerationsgas das in der Regenerationsphase befindliche Adsorptionsmittel (130) durchströmt.

18. Vorrichtung nach einem der Ansprüche 16 oder 17, dadurch gekennzeichnet, daß mehrere Töpfe (81, 82, 83) in der Adsorptionsphase, wenigstens ein Topf (84) in der Vorregenerationsphase und wenigstens ein Topf (85) in der Regenerationsphase sich gleichzeitig befinden.

19. Vorrichtung nach einem der Ansprüche 12 bis 15, dadurch gekennzeichnet, daß der Behälter einen zusätzlichen Kühlabschnitt (58) aufweist, dem Kühlgas von einem Gebläse (179) über ein Schaltventil (176) zugeführt ist, und daß ein Wärmespeicher (150) vorgesehen ist, der die aus dem Kühlabschnitt (58) abgeführte Wärme aufnimmt.

20. Vorrichtung nach Anspruch 19, dadurch gekennzeichnet, daß der Wärmespeicher das Gebläse ist.
